# EUROPEAN PATENT SPECIFICATION

(11) **EP 3 263 810 B1**
(45) Date of publication and mention of the grant of the patent: **15.03.2023**
(21) Application number: 15883451.5
(22) Date of filing: 31.07.2015
(51) Int. Cl.: E05B 47/00, H04W 12/06, G07C 9/00

(54) **HISTORY MANAGEMENT SYSTEM OF ELECTRONIC LOCKING APPARATUS**
VERLAUFSVERWALTUNGSSYSTEM FÜR ELEKTRONISCHE VERRIEGELUNGSVORRICHTUNG
SYSTÈME DE GESTION D'HISTORIQUE D'APPAREIL DE VERROUILLAGE ÉLECTRONIQUE

(30) Priority: 26.02.2015 KR 20150027205
(43) Date of publication of application: 03.01.2018
(73) Proprietor: Kim, Bum Soo, Namyangju-si, Gyeonggi-do 472-769 (KR)
(72) Inventor: Kim, Bum Soo, Namyangju-si, Gyeonggi-do 472-769 (KR)
(74) Representative: Viering, Jentschura & Partner mbB Patent- und Rechtsanwälte
(86) International application number: PCT/KR2015/008074
(87) International publication number: WO 2016/137063

(56) References cited:
- EP-A1- 2 821 971
- JP-A- 2003 184 363
- JP-A- 2006 112 118
- JP-A- 2010 196 272
- KR-A- 20090 005 725
- KR-B1- 101 237 738
- US-A1- 2001 027 671
- US-A1- 2009 165 513
- US-A1- 2011 067 465

## Description

### [Technical Field]

The present disclosure relates to a history management system of an electronic locking device.

### [Background Art]

Generally, a locking device is installed in house drawers or furniture, public building, storage tools of commercial buildings, doors, lockers, and facilities to prepare for security.

Such a locking device for security is generally divided into a mechanical locking device and an electronic locking device, and in the case of a mechanical locking device, there is a problem of security due to the operation of a universal key and the like and there is a problem in that a locking device needs to be replaced when a key is lost.

Accordingly, in order to solve the problem of the mechanical locking device, the technology of the electronic locking device using an electronic key has been developed.

Meanwhile, as an example of such an electronic locking device, in Korean Patent Registration No. 10-1016903, disclosed is a "cylinder-type electronic locking device".

However, in the electronic locking device disclosed above, only the hardware structure of a simple electronic locking device is disclosed, and a system capable of managing the history of the electronic key is not disclosed. Accordingly, development of a system in which a user can manage and check the history of an electronic key has been requested to satisfy user's security issue.

US 2011/067465 A1 discloses a micropower passive electronic lock cylinder including an immovable cylinder body, a rotatable plug, and an electronic control circuit part. An electronic control circuit board electrically connected with a micromotor and locating switches is arranged in the rotatable plug. A lock pin, which is controlled by a displacement limiting cam driven by the micromotor, moves between the immovable cylinder body and the rotatable plug to release or block the rotatable plug.

US 2009/165513 A1 discloses that an electronic lock includes a rotatable core movable within an outer body. The rotatable core includes a piezo-electric actuator configured to move a tumbler blocking member into or out of interfering engagement with one or more tumblers. Tamper circuitry coupled with the piezo-electric actuator is configured to resist an externally induced acceleration of the electronic lock by shunting electrical power produced by an externally induced motion of the piezo-electric actuator back to the piezo-electric actuator.

EP 2 821 971 A1 discloses a portable access control communication device comprising: a housing for protecting a key device, the access control communication device; a socket arranged to hold a blade of a key device, the socket comprising a connector for communication with the key device; a cellular radio communication module; and a controller. The controller is arranged to communicate, using the cellular radio communication module, with an access control device over a cellular communication network when a key device is provided in the socket such that there is galvanic contact between the key device and the socket.

US 2001/027671 A1 discloses that an electronic lock suitable for replacing interchangeable core locks has a solenoid assembly longitudinally aligned parallel to the rotational axis of the cylinder of the lock. Also, an electronic lock has a ferromagnetic enclosure that surrounds at least a portion of a solenoid assembly when the cylinder of the lock is free to rotate.

### [Disclosure]

### [Technical Problem]

An object to be achieved by the present disclosure is to provide a history management system of an electronic locking device, in which since the log information of an electronic key is transmitted from an electronic locking device to an external terminal through the electronic key so that the manager can check the log information through the external terminal, and as a result, the manager can efficiently perform the history management of the electronic locking device and improving the security management efficiency of a used place of the electronic locking device.

The objects of the present disclosure are not limited to the aforementioned effects, and other objects, which are not mentioned above, will be apparent to a person having ordinary skill in the art from the following description.

### [Technical Solution]

According to an aspect of the present disclosure, there is provided a history management system of an electronic locking device according to claim 1. Further embodiments are described in the dependent claims.

### [Advantageous Effects]

According to the exemplary embodiment of the present disclosure, the log information of an electronic key is transmitted from an electronic locking device to an external terminal through the electronic key so that the manager can check the log information through the external terminal, and as a result, the manager can efficiently perform the history management of the electronic locking device and improving the security management efficiency of a used place of the electronic locking device.

### [Description of Drawings]

FIG. 1 is a block diagram illustrating a history management system of an electronic locking device according to an exemplary embodiment of the present disclosure.
FIG. 2 is a perspective view illustrating an example of an electronic key and the electronic locking device of FIG. 1.
FIG. 3 is a cross-sectional view before and after coupling the electronic key and the electronic locking device of FIG. 2.
FIG. 4 is a block diagram illustrating a history management system of an electronic locking device for a plurality of electronic keys.
FIG. 5 is a block diagram illustrating a history management system of an electronic locking device according to another exemplary embodiment of the present disclosure.

### [Best Mode]

Hereinafter, exemplary embodiments of the present disclosure will be described with reference to the accompanying drawings. First, in denoting reference numerals to constitutional elements of respective drawings, the same elements will be designated by the same reference numerals although they are shown in different drawings. Further, in the following description, a detailed explanation of known related technologies may be omitted to avoid unnecessarily obscuring the subject matter of the present disclosure.

Further, terms such as first, second, A, B, (a), (b), and the like may be used in describing the components of the exemplary embodiments according to the present disclosure. The terms are used to just distinguish the component from other components and the essence, sequence, or order of the corresponding component is not limited by the terms. When it is disclosed that any component is "connected", "coupled", or "linked" to other components, it should be understood that the component may be directly connected or linked to other components, but another component may be "connected", "coupled", or "linked" between the respective components.

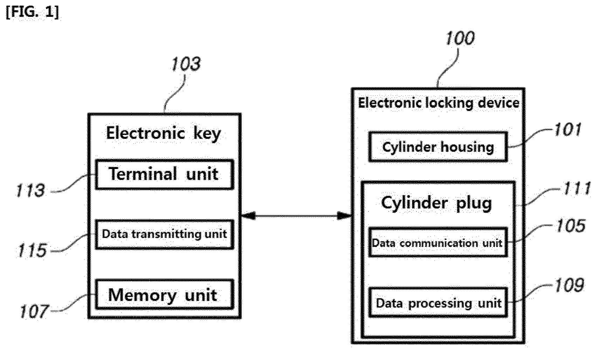

FIG. 1 is a block diagram illustrating a history management system of an electronic locking device according to an exemplary embodiment of the present disclosure.

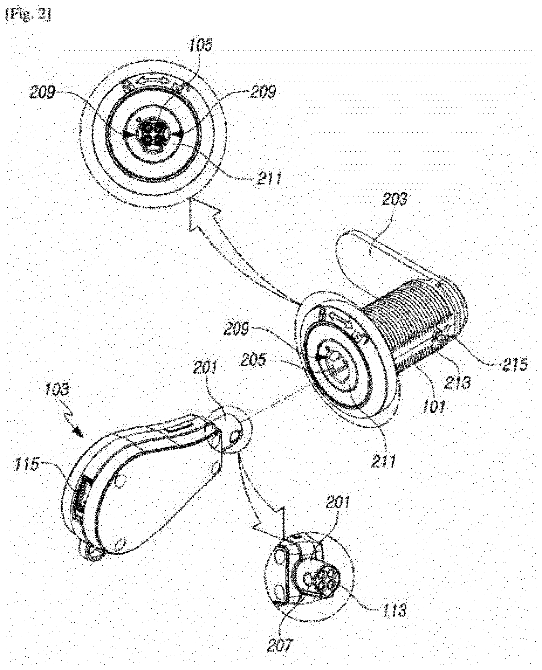

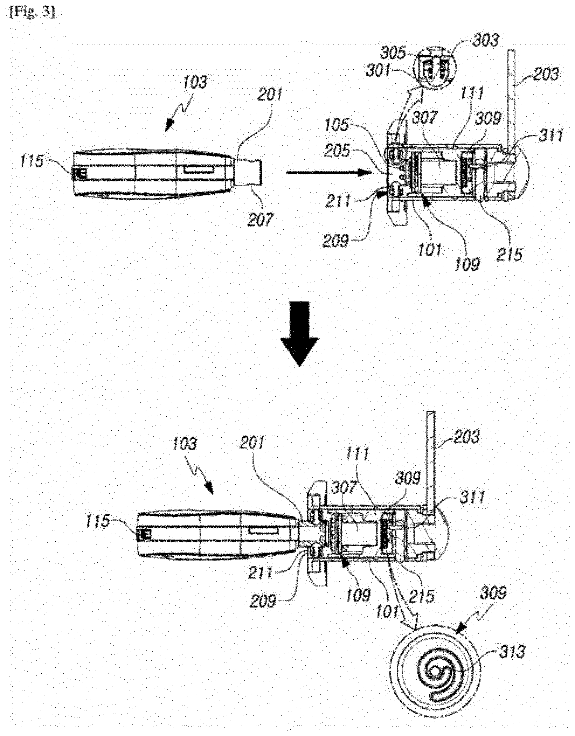

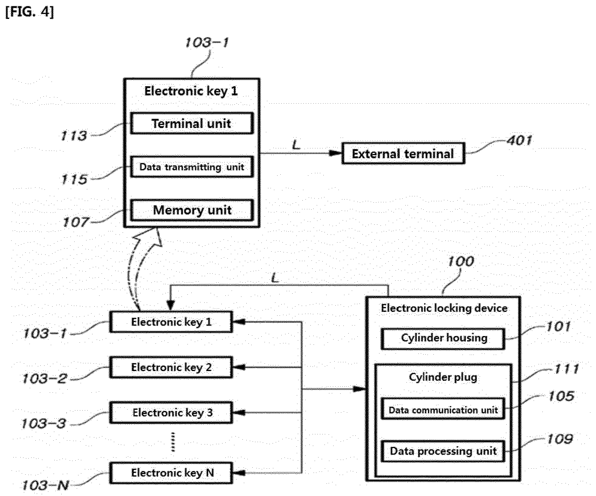

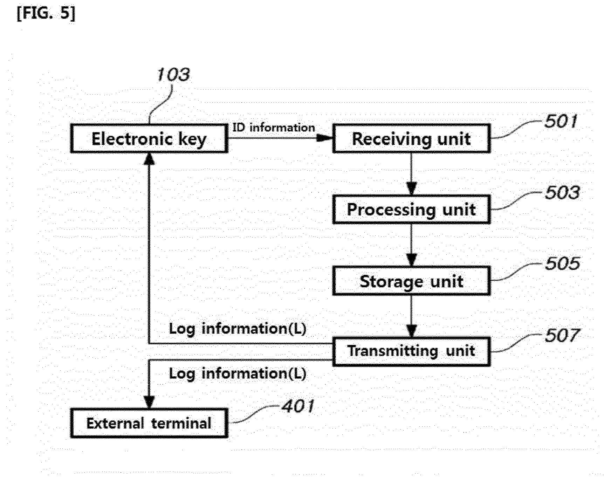

FIG. 2 is a perspective view illustrating an example of an electronic key and the electronic locking device of FIG. 1. FIG. 3 is a cross-sectional view before and after coupling the electronic key and the electronic locking device of FIG. 2. FIG. 4 is a block diagram illustrating a history management system of an electronic locking device for a plurality of electronic keys. FIG. 5 is a block diagram illustrating a history management system of an electronic locking device according to another exemplary embodiment of the present disclosure.

As illustrated in these drawings, a history management system of an electronic locking device 100 according to an exemplary embodiment of the present disclosure includes a cylinder plug 111 which is located inside a cylinder housing 101 forming an appearance, installed rotatably in place, locked or unlocked to the cylinder housing 101, and attached to and detached from a key head 201 of an electronic key 103. The cylinder plug 111 includes a data communication unit 105 which is electrically contacted with a terminal unit 113 provided in the key head 201 of the electronic key 103; and a data processing unit 109 that determines authentication by comparing ID information of the electronic key 103 transmitted by the data communication unit 105 with a pre-stored ID database.

First, a structure of the electronic locking device 100 will be described as an example.

The electronic locking device 100 includes the cylinder housing 101 and the cylinder plug 111.

The cylinder housing 101 forms the appearance, and the cylinder housing 101 has, for example, a hollow cylindrical shape, and a thread is formed on the outer circumferential surface of the cylinder housing 101 and may be screw-coupled with a coupling hole formed in a door or the like.

The cylinder plug 111 is located inside the cylinder housing 101 and rotatably installed in place, the cylinder plug 111 is locked or unlocked to the cylinder housing 101, and a latch bolt 203 is coupled with the cylinder plug 111 and rotated together according to the rotation of the cylinder plug 111.

According to the claimed invention, in such a cylinder plug 111, the data communication unit 105 which is detachably inserted with the key head 201 of the electronic key 103 and electrically contacted with the terminal unit 113 of the key head 201 is provided and a lock head 211 in which a second supporter 209 corresponding to a first supporter 207 formed in the key head 201 to fix the electronic key 103 is provided.

That is, in the lock head 211 provided in the cylinder plug 111, a key insertion hole 205 to which the key head 201 of the electronic key 103 is detachably inserted is formed, and a plurality of data communication units 105 is provided on the bottom (that is, an opposite surface in an opened direction) of the key insertion hole 205 and contacted with the terminal unit 113 provided in the key head 201 when the key head 201 of the electronic key 103 is inserted to the key insertion hole 205. Power and the ID information from the electronic key 103 are transmitted to the cylinder plug 111.

According to the claimed invention, in the lock head 211, the second supporter 209 is formed and corresponds to the first supporter 207 formed in the key head 201 of the electronic key 103 to fixedly support the key head 201 inserted to the key insertion hole 205.

When describing the structure of the first supporter 207 and the second supporter 209 in detail, the first supporter 207 is formed on the outer circumferential surface of the key head 201 as a concavely recessed groove, and the second supporter 209 is provided on a circumferential surface of the key insertion hole 205 to which the key head 201 is inserted, corresponds to the first supporter 207, and may be formed as an elastically supported protrusion.

That is, the second supporter 209 has a structure in which a head portion 301 exposed to the outside from the circumferential surface of the key insertion hole 205 is rounded and an elastic body 305 is coupled to the outer circumferential side of a guide shaft 303 integrally extended from the head 301.

Accordingly, when the key head 201 is inserted to the key insertion hole 205, the head 301 of the second supporter 209 is pressed and jumped out by the elastic restoring force of the elastic body 305 to press and support the first supporter 207 of the key head 201, thereby preventing the electronic key 103 from being easily detached from the cylinder plug 111.

Meanwhile, the cylinder plug 111 includes the data processing unit 109 which performs a function of determining authentication by comparing ID information of the electronic key 103 transmitted by the data communication unit 105 with the pre-stored ID database, a function of storing log information L about the authentication, a function of transmitting the stored log information L to a memory unit 107 of the electronic key 103 via the data communication unit 105, and the like.

In the data processing unit 109, the ID database is pre-stored, and the data processing unit 109 determines authentication by comparing the ID information of the electronic key 103 transmitted by the data communication unit 105 with the ID database.

Only when the ID information of the electronic key 103 is authenticated, a process for the subsequent unlocking operation of the cylinder plug 111 proceeds.

Further, the data processing unit 109 stores log information L indicating whether the electronic key 103 is authenticated, and the log information L includes, for example, log information about whether the electronic key 103 is authenticated or not, log information about an open / close time by the authenticated electronic key 103, and log information about registration / change of a master electronic key.

Meanwhile, the data processing unit 109 transmits the log information L to the memory unit 107 of the electronic key 103 via the data communication unit 105, and in this case, the data processing unit 109 transmits the log information L to the memory unit 107 of the electronic key 103 and then deletes or leaves the stored log information L according to a predetermined condition.

That is, after the log information L is transmitted from the data processing unit 109 to the memory unit 107 of the electronic key 103, the log information L may be left in the data processing unit 109 or deleted and removed, which is determined by a predetermined condition in relation to whether the log information L is deleted.

In addition, the cylinder plug 111 includes a driver 307 that receives a control signal for the authenticating result of the data processing unit 109 to be driven forward or backward; and a lock pin 215 which is drawn into or out from the fixing hole 213 of the cylinder housing 101 according to the operation of the driver 307 and controls the rotation of the cylinder plug 111.

The driver 307 receives the control signal for the authenticating result of the data processing unit 109 to be driven forward or backward, and the driver 307 may be provided as, for example, an electric motor.

The lock pin 215 is drawn into or out from the fixing hole 213 of the cylinder housing 101 according to the operation of the driver 307 to control the rotation of the cylinder plug 111.

Herein, when describing the structure in which the lock pin 215 is operated according to the operation of the driver 307 in detail, a spur gear is coupled to a driving shaft of the driver 307, a direction switching rotary ring 309 having an internal gear formed on one side so that the spur gear is eccentrically inscribed and a spiral groove 313 formed at the other side is provided, and a moving shaft 311 of which one end is inserted into the spiral groove 313 and the other end is coupled with the lock pin 215 is provided. Accordingly, when the driving shaft is driven forward or backward according to the operation of the driver 307, the direction switching rotary ring 309 rotates in one direction or the other direction, and as a result, while the lock pin 215 moves along the spiral groove 313 of the direction switching rotary ring 309, the lock pin 215 moves forward or backward (that is, the lock pin 215 is drawn into or out from the fixing hole 213 of the cylinder housing 101), thereby controlling whether the cylinder plug 111 rotates in the cylinder housing 101.

Meanwhile, the electronic key 103 includes a data transmitting unit 115 that transmits the stored log information L transmitted from the data processing unit 109 of the cylinder plug 111 to the memory unit 107 to an external terminal 401, and the data transmitting unit 115 is wiredly or wirelessly connected with the external terminal 401 to transmit the log information L to the external terminal 401.

The functions (the function of receiving the log information L from the data processing unit 109 of the cylinder plug 111, the function of transmitting the log information L to the external terminal 401, and the like) of the electronic key 103 may be mounted on one electronic key selected from the plurality of electronic key in which the ID information is stored as a separate function.

An operation example of the history management system of the electronic locking device, which is the exemplary embodiment of the present disclosure, will be described with reference to the drawings.

When a plurality of electronic keys (electronic key 1 103-1 to electronic key N 103-N) are used in the cylinder plug 111 of the electronic lock device 100, log information L for each of the electronic key 1 103-1 to the electronic key N 103-N is stored in the data processing unit 109, and the log information L is, for example, downloaded in the memory unit 107 of the electronic key 1 103-1 to be transmitted to the external terminal 401 via the data transmitting unit 115.

Thereafter, the manager may check the history contents of the respective electronic keys (electronic key 1 103-1 to electronic key N 103-N) via the external terminal 401.

The above-described electronic key 1 103-1 may be a master key.

Meanwhile, a history management system of an electronic locking device according to another exemplary embodiment of the present disclosure includes a receiving unit 501 for receiving ID information of an electronic key 103; a processing unit 503 for determining authentication by comparing the ID information transmitted from the receiving unit 501 with a pre-stored ID database; a storage unit 505 for storing log information L about the authentication; and a transmitting unit 507 for transmitting the log information L stored in the storage unit 505 to the electronic key 103 or the external terminal 401.

The receiving unit 501 receives the ID information from the electronic key 103, and for example, the receiving unit 501 is electrically contacted with the terminal unit 113 provided in the key head 201 of the electronic key 103 to receive the ID information of the electronic key 103, and may also receive power from the electronic key 103.

Subsequently, the processing unit 503 determines whether the electronic key 103 is authenticated by comparing the ID information of the electronic key 103 transmitted from the receiving unit 501 with the pre-stored ID database.

Subsequently, the storage unit 505 stores the log information L about whether the electronic key 103 is authenticated which is determined by the processing unit 503, and the log information L includes, for example, log information about whether the electronic key 103 is authenticated or not, log information about an open / close time of the electronic locking key by the authenticated electronic key 103, and log information about registration / change of a master electronic key.

Subsequently, the transmitting unit 507 transmits the log information L stored in the storage unit 505 to the electronic key 103 or the external terminal 401, and the log information L may be transmitted between the transmitting unit 507 and the electronic key 103 or between the transmitting unit 507 and the external terminal 401, which are wiredly or wirelessly connected with each other.

The log information L is transmitted from the transmitting unit 507 to the electronic key 103, stored in the memory unit 107 of the electronic key 103, and then transmitted again to the external terminal 401 which is wirelessly or wiredly connected with the electronic key 103.

Meanwhile, the log information L stored in the storage unit 505 is transmitted to the electronic key 103 or the external terminal 401 through the transmitting unit 507 and then may be deleted or left according to a predetermined condition.

As described above, according to the exemplary embodiment of the present disclosure, since the log information of an electronic key is transmitted from an electronic locking device to an external terminal through the electronic key so that the manager can check the log information through the external terminal, and as a result, the manager can efficiently perform the history management of the electronic locking device and improving the security management efficiency of a used place of the electronic locking device.

Hereinabove, even if it is described that all of constituent elements constituting the exemplary embodiment of the present disclosure are coupled as a single unit or coupled to be operated as a single unit, the present disclosure is not necessarily limited to the exemplary embodiment. That is, among the components, one or more constituent elements may be selectively coupled to be operated within the scope of the object of the present disclosure.

Further, the terms "including", "comprising", or "having" described above mean that the components may be included unless explicitly described to the contrary, and will be understood to imply the inclusion of stated elements but not the exclusion of any other elements. If it is not contrarily defined, all terms used herein including technological or scientific terms have the same meanings as those generally understood by a person with ordinary skill in the art. Terms which are defined in a generally used dictionary should be interpreted to have the same meaning as the meaning in the context of the related art, and are not interpreted as an ideal meaning or excessively formal meanings unless clearly defined in the present application.

The above description just illustrates the technical scope of the present disclosure and various modifications and transformations can be made by those skilled in the art without departing from an essential characteristic of the present disclosure. The scope of the present disclosure should be interpreted by the appended claims.

## Claims

1. A history management system of an electronic locking device (100) comprising a cylinder plug (111) which is located inside a cylinder housing (101) forming an appearance, installed rotatably in place, locked or unlocked to a cylinder housing (101), and detached from a key head (201) of an electronic key (103),
wherein the cylinder plug (111) includes:
a data communication unit (105) which is electrically contacted with a terminal unit (113) provided in the key head (201) of the electronic key (103);
a data processing unit (109) that determines authentication by comparing ID information of the electronic key (103) transmitted by the data communication unit (105) with a pre-stored ID database, and
a lock head (211) for detachably mounting the key head (201) of the electronic locking device (100), for being formed a second supporter (209) corresponding to a first supporter (207) on the key head (201), and for fixing the electronic locking device (100) by engaging the second supporter (209) with the first supporter (207);
**characterized in that** the second supporter (209) includes:
a head portion (301) which is roundly formed on a peripheral surface of a key insertion hole (205) and is exposed to the outside from the circumferential surface of the key insertion hole (205),
a guide shaft (303) which is integrally extended from the head portion (301), and
an elastic body (305) which is coupled to an outer circumferential side of the guide shaft (303),
wherein the first supporter (207) is formed on an outer circumferential surface of the key head (201) as a concavely recessed groove, and the second supporter (209) is provided on a circumferential surface of the key insertion hole (205) to which the key head (201) is inserted, corresponds to the first supporter (207), and is formed as an elastically supported protrusion, and
wherein when the key head (201) is inserted to the key insertion hole (205), the head portion (301) of the second supporter (209) is pressed and jumped out by the elastic restoring force of the elastic body (305) to press and support the first supporter (207) of the key head (201).

2. The history management system of the electronic locking device (100) of claim 1, wherein the data processing unit (109) is configured to store log information about the authentication determined by comparing the ID information of the electronic key (103) with the ID database and to transmit the stored log information to a memory unit (107) of the electronic key (103) through the data communication unit (105).

3. The history management system of the electronic locking device (100) of claim 2, wherein the data processing unit (109) is configured to transmit the log information to the memory unit (107) of the electronic key (103) and then to delete or leave the stored log information according to a predetermined condition.

4. The history management system of the electronic locking device (100) of claim 2, wherein the electronic key (103) includes a data transmitting unit (115) that transmits the log information stored in the memory unit (107) to an external terminal (401).

5. The history management system of the electronic locking device (100) of claim 4, wherein the data transmitting unit (115) is wiredly or wirelessly connected with the external terminal (401) to transmit the log information to the external terminal (401).

## Patentansprüche

1. Ein Historienverwaltungssystem einer elektronischen Verriegelungsvorrichtung (100) mit einem Zylinderstecker (111), welcher innerhalb eines ein Äußeres bildenden Zylindergehäuses (101) angeordnet ist, dort drehbar installiert ist, mit einem Zylindergehäuse (101) verriegelt oder entriegelt ist und von einem Schlüsselkopf (201) eines elektronischen Schlüssels (103) gelöst ist,
wobei der Zylinderstecker (111) aufweist:
eine Datenkommunikationseinheit (105), welche elektrisch mit einer im Schlüsselkopf (201) des elektronischen Schlüssels (103) vorgesehenen Endeinheit (113) kontaktiert wird,
eine Datenverarbeitungseinheit (109), welche die Authentifizierung durch Vergleichen von ID-Informationen des elektronischen Schlüssels (103), welche durch die Datenkommunikationseinheit (105) übertragen werden, mit einer vorgespeicherten ID-Datenbank ermittelt, und
einen Verriegelungskopf (211) zum lösbaren Anbringen des Schlüsselkopfes (201) der elektronischen Verriegelungsvorrichtung (100), zum Ausgebildetsein mit einem zweiten Halter (209), welche mit einem ersten Halter (207) an dem Schlüsselkopf (201) korrespondiert, und zum Fixieren der elektronischen Verriegelungsvorrichtung (100) durch Eingriff des zweiten Halters (209) mit dem ersten Halter (207),
**dadurch gekennzeichnet, dass** der zweite Halter (209) aufweist:
einen Kopfabschnitt (301), welcher an einer Umfangsfläche eines Schlüsseleinführungslochs (205) rund ausgebildet ist und von der Umfangsfläche des Schlüsseleinführungslochs (205) nach außen hin exponiert ist,
einem Führungsschaft (303), welcher sich einstückig von dem Kopfabschnitt (301) aus erstreckt, und
einen elastischen Körper (305), welcher mit einer Außenumfangsseite des Führungsschafts (303) verbunden ist,
wobei der erste Halter (207) an einer Außenumfangsfläche des Schlüsselkopfes (201) als eine konkav vertiefte Nut ausgebildet ist, und der zweite Halter (209) an einer Umfangsfläche des Schlüsseleinführungslochs (205), in welches der Schlüsselkopf (201) eingeführt wird, vorgesehen ist, mit dem ersten Halter (207) korrespondiert und als ein elastisch gestützter Vorsprung ausgebildet ist, und
wobei, wenn der Schlüsselkopf (201) in das Schlüsseleinführungsloch (205) eingeführt wird, der Kopfabschnitt (301) des zweiten Halters (209) durch die elastische Rückstellkraft des elastischen Körpers (305) gedrückt wird und herausspringt, um den ersten Halter (207) des Schlüsselkopfes (201) zu drücken und zu halten.

2. Das Historienverwaltungssystem der elektronischen Verriegelungsvorrichtung (100) nach Anspruch 1, wobei die Datenverarbeitungseinheit (109) dazu eingerichtet ist, Protokollinformationen über die durch Vergleich der ID-Informationen des elektronischen Schlüssels (103) mit der ID-Datenbank ermittelte Authentifizierung zu speichern und die gespeicherten Protokollinformationen über die Datenkommunikationseinheit (105) an eine Speichereinheit (107) des elektronischen Schlüssels (103) zu übertragen.

3. Das Historienverwaltungssystem der elektronischen Verriegelungsvorrichtung (100) nach Anspruch 2, wobei die Datenverarbeitungseinheit (109) dazu eingerichtet ist, die Protokollinformationen an die Speichereinheit (107) des elektronischen Schlüssels (103) zu übertragen und anschließend die gespeicherten Protokollinformationen abhängig von einer vorgegebenen Bedingung zu löschen oder zu belassen.

4. Das Historienverwaltungssystem der elektronischen Verriegelungsvorrichtung (100) nach Anspruch 2, wobei der elektronische Schlüssel (103) eine Datenübertragungseinheit (115) aufweist, welche die in der Speichereinheit (107) gespeicherten Protokollinformationen an ein externes Endgerät (401) überträgt.

5. Das Historienverwaltungssystem der elektronischen Verriegelungsvorrichtung (100) nach Anspruch 4, wobei die Datenübertragungseinheit (115) drahtgebunden oder drahtlos mit dem externen Endgerät (401) verbunden ist, um die Protokollinformationen an das externe Endgerät (401) zu übertragen.

## Revendications

1. Système de gestion d'historique d'un dispositif de verrouillage électronique (100) comprenant un bouchon de cylindre (111) qui est situé à l'intérieur d'un logement de cylindre (101) formant un aspect, installé de manière rotative en place, verrouillé ou déverrouillé sur un logement de cylindre (101), et détaché d'une tête de clef (201) d'une clef électronique (103),
dans lequel le bouchon de cylindre (111) comprend :
une unité de communication de données (105) qui est en contact électrique avec une unité de terminal (113) prévue dans la tête de clef (201) de la clef électronique (103) ;
une unité de traitement de données (109) qui détermine l'authentification en comparant les informations d'identification de la clef électronique (103) transmises par l'unité de communication de données (105) avec une base de données d'identification pré-stockée, et
une tête de verrouillage (211) destinée à monter de manière amovible la tête de clef (201) du dispositif de verrouillage électronique (100), à former un second élément de support (209) correspondant à un premier élément de support (207) sur la tête de clef (201), et à fixer le dispositif de verrouillage électronique (100) par mise en prise du second élément de support (209) avec le premier élément de support (207) ;
**caractérisé en ce que** le second élément de support (209) comprend :
une partie de tête (301) qui est formée de manière arrondie sur une surface périphérique d'un trou d'insertion de clef (205) et est exposée à l'extérieur depuis la surface circonférentielle du trou d'insertion de clef (205),
un arbre de guidage (303) qui s'étend intégralement depuis la partie de tête (301), et un corps élastique (305) qui est couplé à un côté circonférentiel extérieur de l'arbre de guidage (303),
dans lequel le premier élément de support (207) est formé sur une surface circonférentielle extérieure de la tête de clef (201) sous la forme d'une rainure évidée de manière concave, et le second élément de support (209) est prévu sur une surface circonférentielle du trou d'insertion de clef (205) dans lequel la tête de clef (201) est insérée, correspond au premier élément de support (207), et est formé comme une saillie supportée de manière élastique, et
dans lequel, lorsque la tête de clef (201) est insérée dans le trou d'insertion de clef (205), la partie de tête (301) du second élément de support (209) est pressée et ressortie par la force de rappel élastique du corps élastique (305) pour presser et supporter le premier élément de support (207) de la tête de clef (201).

2. Système de gestion d'historique du dispositif de verrouillage électronique (100) selon la revendication 1, dans lequel l'unité de traitement de données (109) est configurée pour stocker des informations de journal concernant l'authentification déterminées en comparant les informations d'identification de la clef électronique (103) avec la base de données d'identification et pour transmettre les informations de journal stockées à une unité de mémoire (107) de la clef électronique (103) par l'intermédiaire de l'unité de communication de données (105).

3. Système de gestion d'historique du dispositif de verrouillage électronique (100) selon la revendication 2, dans lequel l'unité de traitement de données (109) est configurée pour transmettre les informations de journal à l'unité de mémoire (107) de la clef électronique (103) et ensuite pour supprimer ou laisser les informations de journal stockées selon une condition prédéterminée.

4. Système de gestion d'historique du dispositif de verrouillage électronique (100) selon la revendication 2, dans lequel la clef électronique (103) comprend une unité de transmission de données (115) qui transmet les informations de journal stockées dans l'unité de mémoire (107) à un terminal externe (401).

5. Système de gestion d'historique du dispositif de verrouillage électronique (100) selon la revendication 4, dans lequel l'unité de transmission de données (115) est connectée par un fil ou sans fil au terminal externe (401) pour transmettre les informations de journal au terminal externe (401).
